# EUROPEAN PATENT APPLICATION

(11) **EP 2 374 641 A2**
(43) Date of publication of application: **12.10.2011**
(21) Application number: 11162074.6
(22) Date of filing: 12.04.2011
(51) Int. Cl.: B60H 1/00, F16B 2/08, B60N 3/00

(54) **Fastening device to a ventilation grid in a vehicle and related utiliser system**

(30) Priority: 12.04.2010 IT VA20100015 U
(71) Applicant: I.C.U. di Caramaschi Franco, 21010 Arsago Seprio (VA) (IT)
(72) Inventor: Caramaschi, Franco, 21010 Arsago Seprio (Varese) (IT)
(74) Representative: Faggioni, Carlo Maria

(57) **Abstract**

A fastening device to a ventilation grid of a vehicle is disclosed, comprising a removable-connection body for attachment to said grid and a plurality of fastening elements, wherein said connection body (1) is coupled with a spongy spacer (2) and said fastening elements are retaining laces (3) suited to constrain said connection body (1) to said grid with the spongy spacer (2) partly compressed therebetween, the connection body (1) furthermore comprising a hollow joint head (1b) with which a utiliser accessory (4, 6) may be engaged, an airway being defined through said spongy spacer (2) and said joint head (1b), then leading into said utiliser accessory (4, 6).

## Description

### Field of the Invention

The present invention concerns a fastening device to an air conditioning grid in a vehicle, such as a car, a caravan or a lorry. In particular, it concerns a fastening device for a plurality of utiliser systems, such as in particular a drink cooling or heating system.

### Background Art

As known, drink cooling or heating devices to be used in a vehicle have already been proposed which use the air of the conditioning system as a heat source or heat drain. Such devices are in the shape of a small container provided with slits or paths for the circulation of heat exchange air, which device is fastened to the outlet vents or outlet grids of the air conditioning system of a vehicle. Examples of these devices are described in IT8921236, US2008178623 or US6560983.

The cool air (around 18°C) of the air conditioning system or the hot air (even up to 40°C) of the heating system, suitably conveyed into the container, allows to cool or heat the drink (or other specific contents) very rapidly, without having to arrange further energy sources onboard the vehicle (for example electric energy for the operation of a small fridge). Typically, the air of the conditioning system is expelled from the grid in a horizontal direction, enters laterally into the container and comes out of the same in a vertical direction, so as not to disturb the nearest user, who may have switched on the air-conditioning system only for their specific purpose and may not wish to receive air directly.

However, except for the solutions configured especially by the vehicle manufacturing company - which may provide an actual thermal compartment for the guided inflow of hot/cold air - independent and universal devices of this type, applicable to existing air grids, suffer from general fastening instability. The fastening precariousness is due both to the construction tolerances of the device - which cannot be too precise, to adapt to thermal expansion and to aid mounting/taking off thereof - and to the fact that it must be able to adapt on average to a myriad of different types of vehicle ventilation grids which are not at all standardised.

As a matter of fact, it must be taken into account that air outlet grids not only have different shapes and sizes, but also have a front surface variously inclined with respect to the vertical plane, while the device to be fastened - typically the drink container (for example a tin or a baby bottle) - should ideally always remain in the orientation it was designed for (for example vertical to avoid drink spilling).

The wide play which originates between the device to be fastened and the vehicle ventilation grid produces an annoying device vibration, especially during vehicle movement. Such play furthermore produces a series of side blow-bies of air which - in addition to reducing device efficiency - are unpleasant for the passengers. It is hence impossible to provide a universal fastening device which is suitable on the majority of vehicles: the manufacturer must provide various models, with all the warehouse and distribution burdens this entails.

These defects are the main cause of the poor diffusion such drink-containing device has encountered up until today. Moreover, although in the following reference will essentially be made to the employment thereof for drink cooling/heating, other contexts exist wherein it is desirable to be able to have a stable fastening system with no air blow-by.

The object of the present invention is hence to provide a fastening system to a grid for the outflow of air-conditioning air, which guarantees a stable connection of a device to be fastened, such as a drink cooling/heating device; a further object is to provide such a fastening system which is also suitable for attachment to other devices which can exploit hot or cold air of the air-conditioning system.

### Summary of the Invention

Such object is achieved by a fastening system as defined in its essential features in the attached claims.

In particular, according to a first aspect of the invention, a fastening device to a ventilation grid of a vehicle is provided, comprising a body for the temporary connection to said grid and a plurality of fastening elements, wherein said connection body is coupled with a spongy spacer and said fastening elements are retaining laces suited to constrain said connection body to said grid with the spongy spacer partly compressed therebetween, the connection body furthermore comprising connection means with which a utiliser accessory may be engaged.

According to another aspect, such connection means are in the shape of a joint head, an airway being defined through said spongy spacer and said joint head, then leading into said utiliser accessory.

According to a preferred aspect, the joint head has a spherical shape, cut along a first plane parallel to and offset with respect to the equatorial plane and along a second inclined plane apt to define a flaring.

The connection body comprises a plate which has entry and engagement holes for said retaining laces.

Advantageously, the spongy spacer is made of an elastomeric foamed material, with closed or semi-closed cells. Preferably, said foamed material is based on polyethylene-elastomer, in particular of the family of EPDM rubbers.

According to another aspect, an adjustment system of the temperature of a drink in a vehicle is provided, comprising a device as indicated above and a cylindrical container coupled to said joint head through a hollow mouth.

According to yet another aspect, a distribution system of conditioned air of a vehicle is provided, comprising a device as indicated above, an elbow-shaped tubular connection, coupled with said connection means, and a flexible delivery pipe coupled with said elbow-shaped, tubular connection.

Preferably, an air diffuser is provided at the distal end of said flexible pipe, which consists of a coat hanger equipped with a central tubular portion suited to cause an airflow to converge towards the inner face of the two branches of said coat hanger.

According to a last aspect, a kit for distributing air from an air-conditioning system of a vehicle is provided, comprising both a distribution system as indicated above, and a cylindrical container for the cooling/heating of drinks, as cited above.

### Brief Description of the Drawings

Further features and advantages of the invention will become more evident from the following detailed description of some preferred embodiments, given purely as a non-limiting example and illustrated in the attached drawings, wherein:
figs. 1, 2 and 3 are side elevation, top plan and front elevation views, respectively, of a connection body according to the invention;
fig. 4 is a perspective view of the connection body of fig. 1;
fig. 5 is a perspective view of a spongy spacer to be applied to the connection body of fig. 1;
fig. 6 is a perspective view of an exemplifying lace according to the invention;
figs. 6A is a side elevation view of a different embodiment of the lace of fig. 6;
fig. 7 is a perspective view of the device according to the invention assembled with a drink-holder;
fig. 8 is a perspective view of an alternative accessory suited to cooperate with the device according to the invention;
figs. 9 and 10 are elevation side and top plan views of the accessory of fig. 8;
fig. 11 is an exploded, perspective view of the device according to the invention with the accessory of fig. 8;
fig. 12 is an elevation front view of a variant of the system according to the invention; and
fig. 13 is a bottom plan view of the diffuser of the system of fig. 12.

### Detailed Description of Currently Preferred Embodiments

A fastening system to a ventilation grid of a vehicle consists - in a way known per se - of a connection device whereon a container/cup may be made integral for housing a container to be heated or cooled, or another connection system for other appliances.

According to the invention, the connection device consists of a substantially rigid connection body 1, of a spongy spacer 2, as well as of a plurality of retaining laces 3.

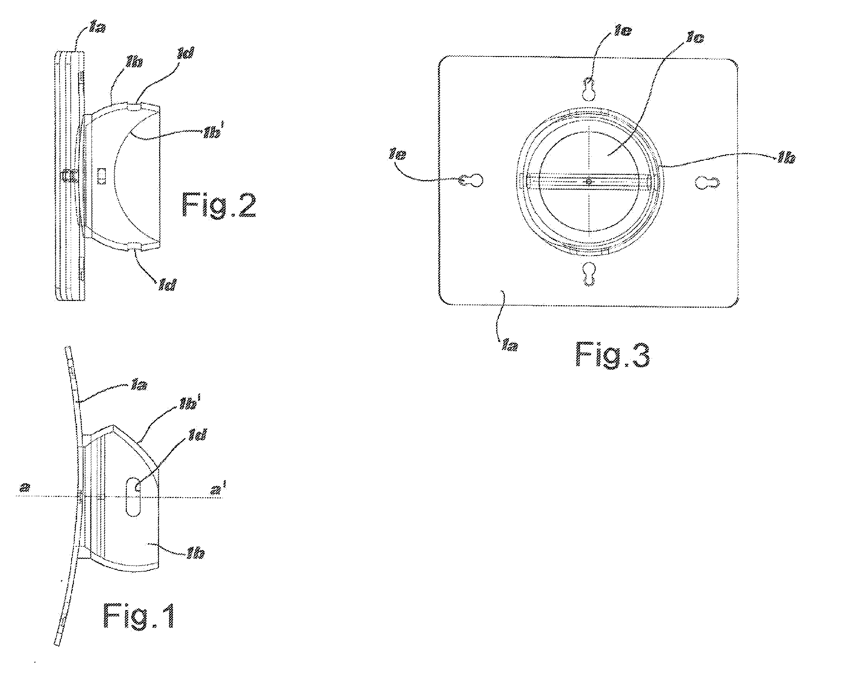

With reference to figs. 1-4, connection body 1 consists of a plate 1 of plastic material, slightly arched along a single axis, at the centre of which a hollow joint 1b is protrudingly mounted, moulded of plastic material. In correspondence of a passage axis a-a', substantially perpendicular to plate 1a, a wide-diameter, through-opening 1c is provided, both in joint 1b and in plate 1a.

In particular, as illustrated, joint 1b preferably has a completely-hollow, spherical head shape, cut along a plane perpendicular to axis a-a' - just beyond an equatorial plane of joint 1b - and along an oblique plane, so as to define also a flare or bevel 1b' on one part of spherical joint 1b.

On the equatorial plane of the spherical joint two through slits 1d are furthermore provided on diametrically opposite sides.

Joint 1b is preferably obtained as a separate piece, typically by plastic moulding, and is subsequently applied to curved plate 1a, for example by snap fitting on opening 1c.

In order to stiffen joint 1b, consisting of thin walls, and to cause it to cooperate on a secure coupling with the opening 1c of plate 1a, an inner crossmember 11 can possibly be provided, arranged across the inner cavity of joint 1b, in the proximity of the area connecting to plate 1a.

On plate 1a a plurality of apertures 1e is provided, preferably of the type with two adjacent, differently-sized holes. Advantageously, apertures 1e are arranged pairwise, preferably diametrically opposite with respect to opening 1c. Despite being able to provide a certain number of these pairs of apertures, at least two fall in the correspondence of the same axis connecting the two slits 1d.

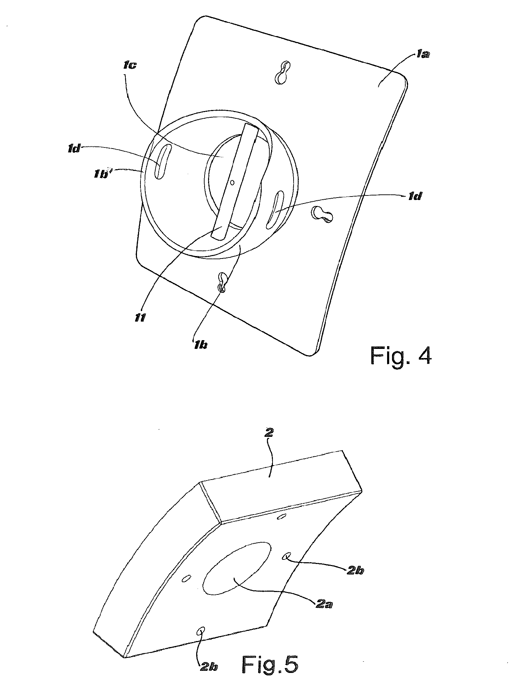

Moreover, according to the invention, connection device 1 is associated with a spacer shaped like a spongy body 2. Said body is attached to plate 1a on the opposite side to joint 1b. As visible in fig. 5, spongy body 2 has a shape generically matching that of plate 1a - including holes 2a and 2b in correspondence of opening 1c and of the apertures 1e of plate 1a, respectively - and has a thickness suited to act both as a sealing and as a vibration dampener, as well as filling the various irregularities of the bearing surfaces, so as to eliminate any undesired play resulting from the connection to the ventilation grid. Such thickness ranges for example between 0.5 cm and 3 cm.

The spongy body is made of a foamed material, with closed or semi-closed cells, preferably of an elastomeric base to improve the behaviour thereof in the specific application. A suitable material is a sponge, with closed or semi-closed cells, based on a polyethylenic elastomer, in particular of the family of the so-called EPDM rubbers (terpolymers of butadiene-ethylen-propylene). A commercial material suited to the object is, for example, the EPT Sealer of the 685 series manufactured by Nitto Denko.

The steady coupling between spongy spacer 2 and plate 1a can be obtained for example by means of glues.

The elastomere-based, foamed material is particularly suited to absorb the vibrations and to act as seal with respect to undesired air leaks. The inherent flexibility of this material, together with an adequate thickness, furthermore allows to adapt the connection device to multiple, various shapes and irregularities of the bearing surfaces in the area around the ventilation grids of the vehicles: this avoids any possible air blow-by. Finally, the elastomeric nature of these sponges guarantees good adhesion to the surface around the grid, so as to avoid undesired displacements of the device with respect to the grid, both in a horizontal direction, and especially in a vertical direction.

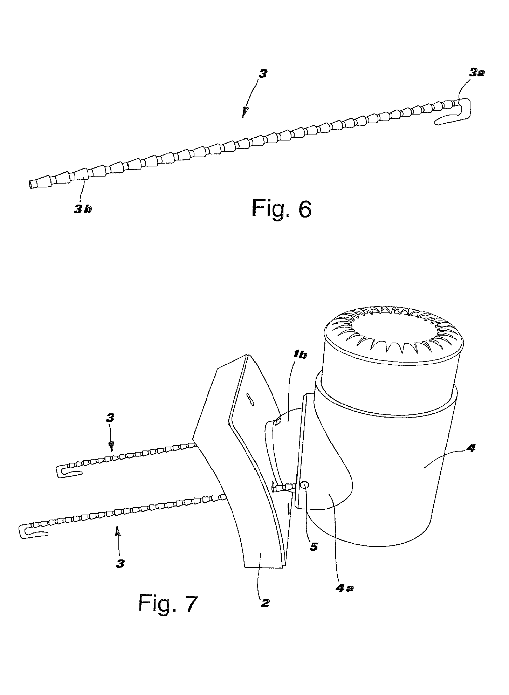

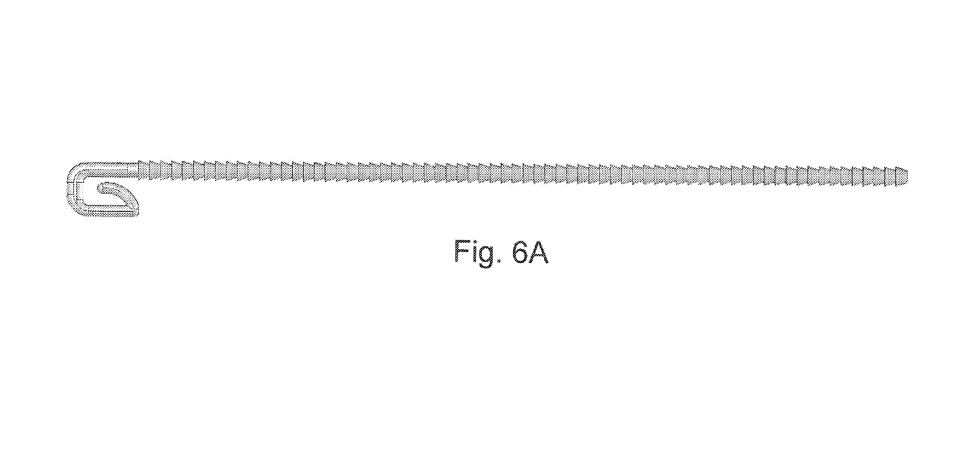

The assembly consisting of connection body 1 with spongy spacer 2 is meant to be retained to a ventilation grid by means of laces 3. Preferably, said laces, as shown in fig. 6, are shaped as thread-shaped elements equipped with a terminal hook 3a. The main portion of the lace is instead shaped with a series of short tapered modules 3b (for example conical ones), longitudinally connected in series, with their widest part towards terminal hook 3a. Fig. 6A shows a lace variant, wherein the terminal hook portion has a configuration similar to a letter G, which guarantees a better anchoring to certain types of grids for vehicles.

Operatively, terminal hooks 3a are fastened to internal crossmembers (not shown) of the ventilation grid and then the opposite end of laces 3 is introduced into apertures 1e and 2b of the connection assembly (fig. 7). By tensioning lace 3, so as to keep hook 3a engaged with the grid, connection body 1 is then pushed towards the grid surface, causing the lace to slide within the respective holes. Plate 1a is pushed towards the outer surface of the ventilation grid, until it suitably compresses the spongy spacer or buffer, so that it adheres well to the bearing surface and it absorbs any local ruggedness.

In this condition, laces 3 are slightly displaced laterally, so as to cause them to engage with the reduced part of apertures 1e and hence prevent a removal of tapered elements 3b. Plate 1a is hence constrained against the grid by laces 3, which do not allow the subsequent moving away thereof.

The compression of spongy body 2 produces a contrary elastic reaction which is taken by laces 3, which thereby remain tensioned. Once compressed, the spongy spacer absorbs also any play and prevents undesired vibrations and movements of the connection device with respect to the grid.

An extremely effective and stable fastening device is thereby obtained, regardless of the variability of grid shapes and orientations existing on the different vehicles.

Various utiliser accessories may furthermore be fastened to spherical joint 1b.

Fig. 7 shows a cup or container 4 for a drink container, for example a tin or a baby bottle.

Container 4 is generically cylindrically shaped and has laterally an inlet mouth 4a suited to couple with joint 1b. Said coupling is guaranteed by the engagement of the outer surface of joint 1b with the surface of the inner seat of inlet mouth 4a.

A transversal peg 5 is furthermore provided which intercepts two opposite holes of inlet mouth 4a and the two slits 1d on joint 1b.

Also, inlet mouth 4a is completely hollow, to allow the airflow from the grid up to within container 4, passing through sponge thickness 2, plate 1a and joint 1b.

The inner seat of inlet mouth 4a is larger than the head of joint 1b, so as to make any relative position adjustments possible, both in a vertical direction and in rotation around peg 5. As a matter of fact, due to the spherical shape of joint 1b and to peg pivot 5, container 4 may be oriented with respect to plate 1a, moving it and then locking it on joint head 1b: this allows to arrange the container with an upright orientation - to avoid spilling of the contents - regardless of the specific orientation taken on by plate 1a when it is securely applied to the specific grid of the vehicle.

In the orientation illustrated in fig. 7, the flare 1b' of the joint - which is arranged in the upper part - prevents a part of joint-shaped head 1b from excessively invading the inside of container 4, so that the introduction of the drink container into container 4 is not hindered.

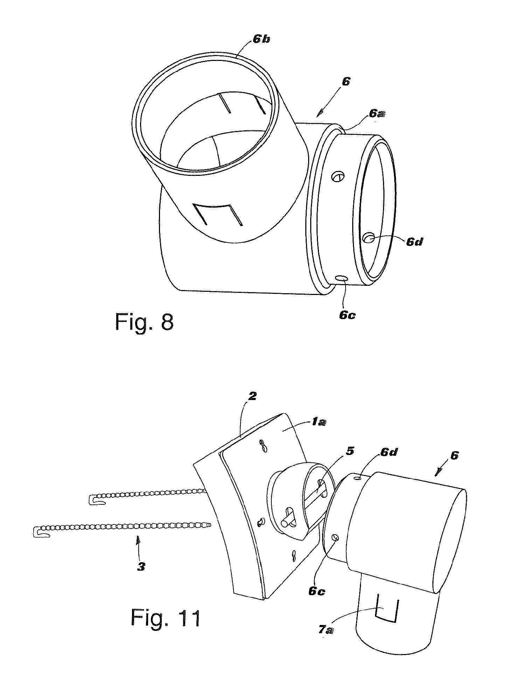

Figs. 8-11 show instead a joining accessory 6, suited for coupling with the fastening device according to the invention. In this case, joining accessory 6 consists of an L-shaped elbow defined by two joined tubular elements 6a and 6b, the former one suited to be mounted on joint head 1a, the latter suited to be coupled with a portion of flexible pipe of a similar diameter.

First tubular element 6a has a mouth provided with at least two pairs of diametrically opposite holes 6c and 6d, such as to be able to engage with the peg 5 of joint 1b according to various orientations (fig. 11) with respect to outflow axis a-a'.

Joining accessory 6 may hence be steadily fastened, as indicated also above, to the fastening device according to the invention. Such accessory 6 is suitable to deviate the air coming out of the ventilation grid of the vehicle, along a substantially perpendicular expulsion axis with the desired orientation. A flexible pipe of the desired length (not shown), snap-joined to the second tubular element 6b of accessory 6, may be configured to transfer hot air into an area of the vehicle away from the ventilation grid, for example towards the rear passengers or into a rear compartment of a caravan or of a van. The flexible pipe may also carry, at the end thereof, an air diffuser suitable to be used as hair-dryer or to dry damp clothes or the like.

The flexible pipe may be advantageously made of extensible, corrugated paper material, within which a sheet of metal material is coupled: it has been found that such configuration guarantees the best air transfer from the grid to the pipe exit, with the lowest heat losses (both cooling and heating) and with excellent pipe duration.

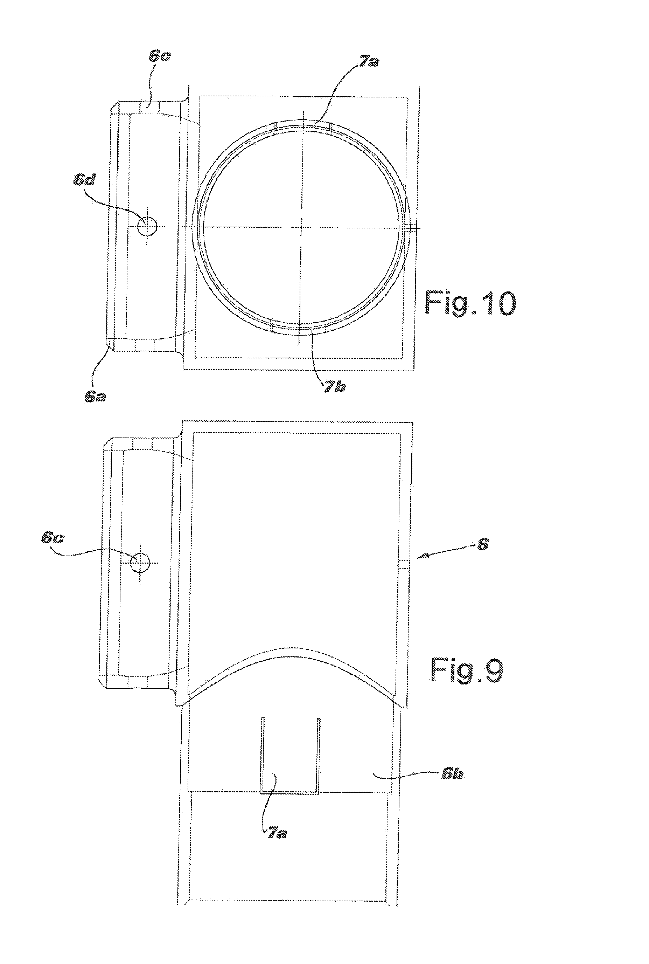

Figs. 9 and 10 show in greater detail elbow-shaped accessory 6. It can be noticed that the second tubular element 6b is preferably shaped so as to comprise two opposite elastic flaps 7a and 7b on the cylindrical side walls. These flaps 7a and 7b are apt to snap engage with corresponding detents (not shown) on the terminal end of the flexible pipe, to guarantee temporary mutual coupling.

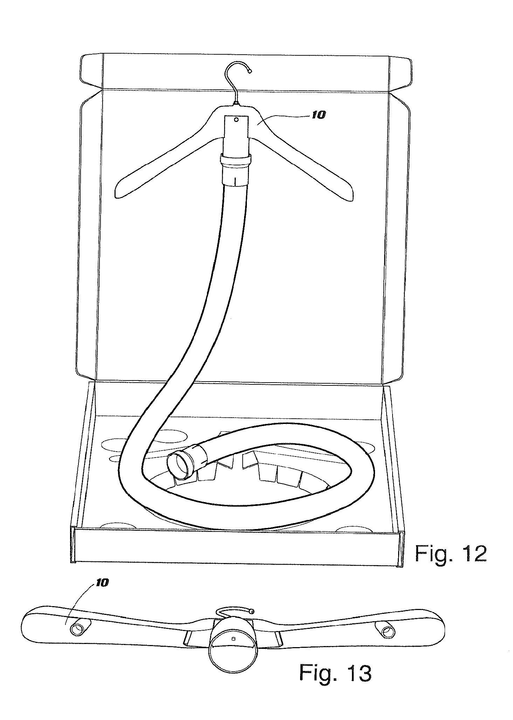

According to a preferred embodiment of the invention, a kit is provided comprising the connection device, a drink-containing cup, a joining device, a tubular element (extended length of at least 2 mt) and a distribution element obtained from a coat hanger. Depending on the application the user intends to use, he will associate the connection device either with the cup or with the joining device. In the latter case, he can connect the tubular element and distribute hot/cold air to wherever he likes. The diffusion element is obtained from an ordinary coat hanger 10 (see figs. 12 and 13), in the central-lower portion of which a tubular joining portion having been applied, apt to convey air onto the (inner) intrados part of the two arms of hanger 10: by connecting the tubular element to such tubular joining portion, it is possible to obtain air distribution towards the two arms of the coat hanger, so as to effectively diffuse it into a suit hanging on the coat hanger, which may for example cause quick drying of said suit.

A further embodiment of the fastening device according to the invention provides to obtain no through-hole even in the base plate: in such case the device fully obstructs the delivery grid and it is used exclusively as fastening and support system for an accessory. The device may hence be used, for example, as mobile-telephone-holder or satellite-system-holder.

This mode of use may be obtained also by simply providing a fully closed spongy spacer, which thereby acts as sealed obstruction of the ventilation grid. According to this variant, the spongy spacer is then cut open by the user, if needed (i.e. if he device must be used for air distribution), following the instructions contained in the package. In order to ease operations, the fastening device according to this embodiment is supplied with a cutting template, whereon a plurality of perimeters of cut-outs obtainable in the spongy spacer are drawn: through the use of scissors or a cutter, the user can hence determine in the spongy spacer the opening best suited for the grid of his vehicle.

As one can easily infer from the above-reported description, the fastening device according to the invention allows to perfectly achieve the objects set forth in the premises.

The slight curvature of plate 1a and the spongy spacer allow to perfectly adapt the fastening device to any existing ventilation grid, absorbing any ruggedness and hence avoiding vibrations, displacements and air blow-by. The advantageous shape suggested for the joint-shaped head guarantees a certain opportunity for adjustment of the accessory mounted on the device, to the benefit of the position which can be taken, for example, by the drink which must be cooled/heated.

However, it is understood that the scope of protection of the above-described invention is not limited to the specific configurations illustrated, but extends to any other construction variant which falls within the scope of the attached claims.

In particular, the connection laces to the grid may also have a different shape. For example, simple strings with a terminal hook can also be provided: once the strings are stretched and the connection body has been pushed so as to adhere against the bearing surface surrounding the grid, the constraint may be stabilised creating a knot on the string and locking it to plate 1a with retaining means. Alternatively, the classic cable ties of plastic material can also be used, of the removable type or not. Or, again, other, more complex systems, such as serrated strips which engage with opening, non-return means, mounted integral with plate 1a.

Finally, the rotational constraint provided by peg 5 can also be removed, to the benefit of a greater mobility and adjustability of the accessory on the joint-shaped head. In such case a bead or screw may be provided which, suitably tightened on inlet mouth 4a, grips the underlying joint-shaped head, so as to create a suitable friction which allows to lock the accessory on the head in the desired position and orientation. The taking off of the accessory from the joint-shaped head is nevertheless prevented by a snap coupling between inlet mouth 4a and the spherical joint which is cut by a plane which passes beyond the equatorial line.

## Claims

1. Fastening device to a ventilation grid of a vehicle, comprising a removable-connection body capable of being connected to said grid and a plurality of fastening elements, **characterised in that** said connection body (1) is coupled with a spongy spacer (2) and said fastening elements are retaining laces (3) suited to constrain said connection body (1) to said grid with the spongy spacer (2) partly compressed therebetween, the connection body (1) furthermore comprising connection means (1b) with which a utiliser accessory (4, 6) can be engaged.

2. Fastening device as claimed in claim 1, wherein said connection means are shaped as a joint head (1b), an airway being defined through said spongy spacer (2) and said joint head (1b) then leading to said utiliser accessory (4, 6).

3. Device as claimed in claim 2, wherein said connection body consists of said joint head (1b) joined to a plate (1a) curved along an axis.

4. Device as claimed in claim 3, wherein said joint head (1b) has a spherical shape, cut along a first plane parallel and offset with respect to the equatorial plane thereof and along a second inclined plane apt to define a flare (1b').

5. Device as claimed in claim 3 or 4, wherein said joint head (1b) has a pair of opposite through-slits (1d) into which a connection peg (5) can be introduced.

6. Device as claimed in claim 3, 4 or 5, wherein said plate (1a) has entry and engagement apertures (1e) for said retaining laces (3).

7. Device as claimed in any one of the preceding claims, wherein said spongy spacer (2) is made of foamed elastomer-based material, with closed or semi-closed cells.

8. Device as claimed in claim 7, wherein said foamed material is based on polyethylene-elastomer, in particular of the family of EPDM rubbers.

9. Adjustment system of the temperature of a drink in a vehicle, **characterised in that** it comprises a device as claimed in any one of claims 2 to 8 and a cylindrical container (4) coupled, through a hollow inlet mouth (4a), to said joint-shaped head (1b).

10. Distribution system of conditioned air of a vehicle, **characterised in that** it comprises a device as claimed in any one of claims 2 to 8, an elbow-shaped tubular connection (6), coupled with said connection means, and a flexible delivery pipe coupled with said elbow-shaped tubular connection (6).

11. Distribution system as claimed in claim 10, wherein an air diffuser is provided at the distal end of said flexible pipe which acts as hair-dryer.

12. Distribution system as claimed in claim 10, wherein an air diffuser is provided at the distal end of said flexible pipe which consists of a coat hanger equipped with a central portion suited to cause an airflow to converge towards the intrados of the two branches of said coat hanger.

13. Distribution kit of conditioned air of a vehicle, **characterised in that** it comprises a distribution system as claimed in one of claims 10 to 12 and a cylindrical container (4) as claimed in claim 9.
